# EUROPEAN PATENT APPLICATION

(11) **EP 2 594 153 A1**
(43) Date of publication of application: **22.05.2013**
(21) Application number: 10854766.2
(22) Date of filing: 06.08.2010
(51) Int. Cl.: A45C 11/00

(54) **MOBILE-PHONE BUMPER CASE**

(30) Priority: 16.07.2010 KR 20100070258
(71) Applicant: Joong Ang T&C Co., Ltd., Gyeonggi-do 421-741 (KR)
(72) Inventor: SEO, Jung Ki, Seoul 135-891 (KR)
(74) Representative: von Kreisler Selting Werner
(86) International application number: PCT/KR2010/005147
(87) International publication number: WO 2012/008644

(57) **Abstract**

There is provided a mobile-phone bumper case having improved functions, which has an appropriate structure corresponding to a smartphone having a touch type information input means to flexibly cover an outer peripheral surface of a rim of the smartphone, is provided with a protruded portion formed to partially cover circumferences of outer peripheral surfaces of front and rear surfaces of the smartphone, and has a U-shape cross section, capapble of protecting an external appearance of the smartphone, expressing personality of a user, and improving a receive sensitivity of radio waves. The mobile-phone bumper case is integrally formed in a shape corresponding to an external shape of a smartphone. The bumper case includes a frame that flexibly covers the smartphone along an outer peripheral surface of a rim of the smartphone. The frame is provided with a protruded portion that is integrally formed to extend along circumferences of front and rear surfaces of the smartphone so as to partially cover circumferences outer peripheral surfaces of the front and rear surfaces of the smartphone, and has a U-shape cross section.

## Description

### [Technical Field]

The present invention relates to a mobile-phone bumper case.

More particularly, the present invention relates to a mobile-phone bumper case having improved functions, which has an appropriate structure corresponding to a smartphone having a touch type information input means to flexibly cover an outer peripheral surface of a rim of the smartphone, is provided with a protruded portion formed to partially cover circumferences of outer peripheral surfaces of front and rear surfaces of the smartphone, and has a U-shape cross section, capapble of protecting an external appearance of the smartphone, expressing personality of a user, and improving a receive sensitivity of radio waves.

### [Background Art]

In recent years, smart mobile phones (hereinafter, referred to as "smartphones") having a touch type information input means have been rapidly grown in use, including Apple's iPhone. These smartphones having various functions and extensive contents have become leading products in the portable communication terminal market.

Especially, the smartphone enables users to conduct immediately and concurrently various businesses anywhere at any time using all sorts of commercial information networks, and to freely utilize the Internet. The smartphones embedded with multi-display and various useful program sources have various functions, so that it is predicted that an increase in use of the smartphones will last first and foremost for some time.

However, since the smartphone of such useful functions and a relatively high price is a unitary product into which various electronics are integrated, damages or cracks are more likely to occur due to an external impact or friction.

Further, most users generally talk on the phone or use other functions of the phone while grapping both side surfaces of the smartphone, and an embedded antenna is provided at an outer peripheral surface of the rim thereof due to a structure of the smartphone. In this case, the portion provided with the antenna is frequently gripped by hands of a user, and thus a receive sensitivity of radio waves may be influenced due to foreign substances and touching by the user.

There have been used the so-called jelly or silicon case which is made of soft rubber to cover an external appearance of the smartphone, or a leather case to which a PC (polycarbonate) injection molded body is attached to protect an external appearance of the smartphone. However, since these cases are formed to integrally cover the rear surface and the side surfaces of the smartphone, there are problems such as excessive consumption of materials, a difficulty in manufacturing, an increase in cost, and a disturbance of an exposure of a unique design of the smartphone.

In addition, when the jelly or silicon case made of a pure and soft material is repeatedly attached to or detached from the smartphone, the case may be deformed in a shape and damaged due to weakness in material properties. Further, when using the leather case, since the hard PC injection molded body firmly clamps the smartphone, there are problems such as reduction in a receive sensitivity, and an inconvenience to grip the smartphone by a user.

### [Disclosure]

### [Technical Problem]

An object of the present invention is to provide a mobile-phone bumper case having a minimum function, capable of improving a structure design of a case so as to cover portions of a smartphone necessary to protect, exposing a unique design of the smartphone as it is, and protecting an external appearance of the smartphone from an external impact or friction without reception interference.

### [Technical Solution]

In order to achieve the above object, an exemplary embodiment of the present invention provides a mobile-phone bumper case that is integrally formed in a shape corresponding to an external shape of a smartphone. The bumper case includes a frame that flexibly covers the smartphone along an outer peripheral surface of a rim of the smartphone. The frame is provided with a protruded portion that is integrally formed to extend along circumferences of front and rear surfaces of the smartphone so as to partially cover circumferences of outer peripheral surfaces of the front and rear surfaces of the smartphone, and has a U-shape cross section.

A central portion of a rim of the frame of the bumper case may be made of hard synthetic resin, and wing surfaces of both side surfaces of the frame and the protruded portion extending toward the front and rear surfaces may be made of soft rubber so as to be integrally formed by a two-shot injection molding process.

Openings may be formed in portions on the frame corresponding to function keys provided at the rim of the smartphone so as to allow the function keys to be operated without a hitch. Alternatively, soft rubber may be formed at portions of the frame corresponding to function keys by a two-shot injection molding process.

In the connection method of the two-shot injection molding process, the hard synthetic resin frame may be buried into the soft rubber. Alternatively, the soft rubber may be connected onto both side surfaces of the hard synthetic resin frame through male-female connection mechanism. Otherwise, stepped portions may be formed on both side surfaces of the hard frame, the soft rubber may be formed to have shapes corresponding to the stepped portions, and the hard frame and the soft rubber may be bonded to each other.

The protruded portion of the frame, which extends toward the front and rear surfaces, may be formed to have a minimum width along the circumferences of the outer peripheral surfaces of the front and rear surfaces of the smartphone so as not to disturb an exposure of a unique design of the smartphone.

### [Advantageous Effects]

According to the bumper case of the present invention, it is possible to exhibit a unique design of the smartphone by covering necessary portions of the smartphone to a minimum, it is possible to receive radio waves with high quality by removing the factors causing reception interference. Further, it is possible to protect not only the outer peripheral surface of the rim on the side surfaces of the smartphone but also the front and rear surfaces thereof from a direct external impact or friction by impact-absorbing.

### [Description of Drawings]

FIG 1 is a perspective view illustrating a bumper case according to an embodiment of the present invention.
FIG. 2 is a perspective view illustrating a bumper case according to another embodiment of the present invention.
FIGS. 3 to 5 are partial cross-sectional views of the bumper case as illustrated in FIG. 2.
FIG 6 is a perspective view illustrating an in-use state of the bumper case as illustrated in FIG 2.
FIG 7 is a perspective view illustrating a mobile-phone case according to still another embodiment of the present invention.
FIG. 8 is an enlarged cutaway cross-sectional view of the case as illustrated in FIG. 7.

### [Description of Main Reference Numerals of Drawings]

| | | | |
|---|---|---|---|
| 10: | Frame | 10a: | Wing surface |
| 11: | Protruded portion | 12: | Opening |
| 13: | Mobile-phone case | | |

### [Mode for Invention]

Hereinafter, the present invention will be described in more detail with reference to the accompanying drawings.

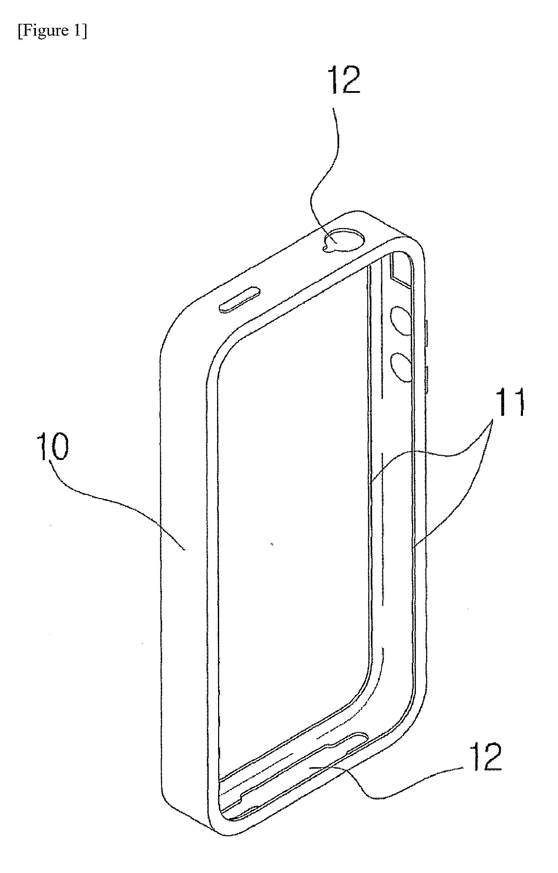

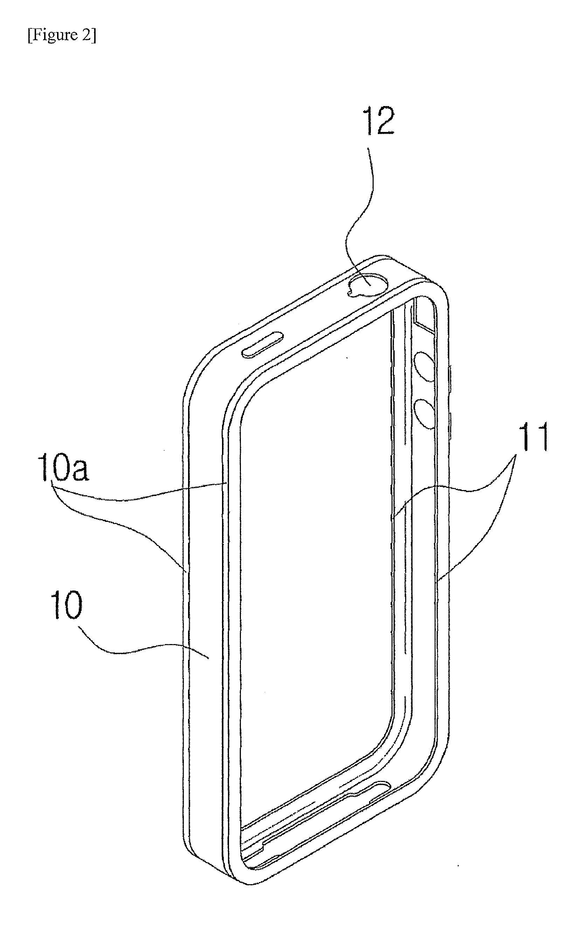

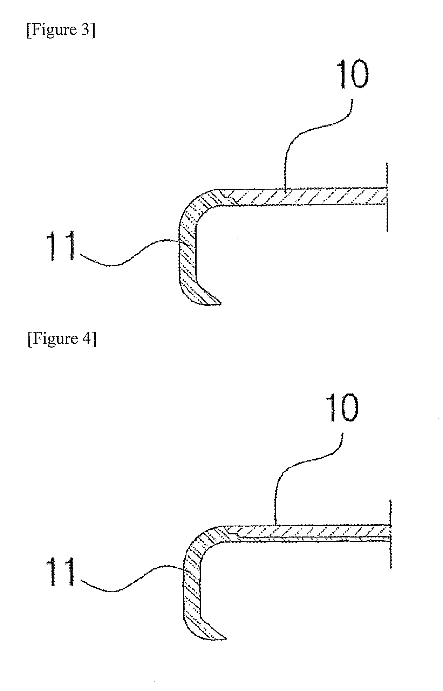

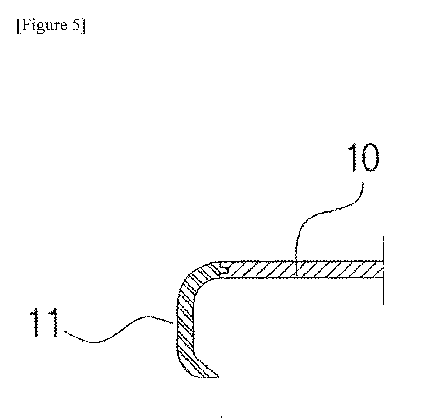

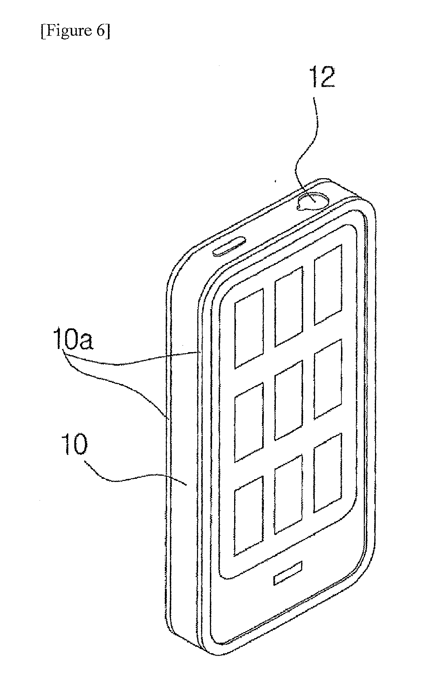

FIGS. 1 and 2 are perspective views illustrating a bumper case according to embodiments of the present invention, FIGS. 3, 4, and 5 illustrate cutaway cross sections of the bumper case, and FIG. 6 illustrates an in-use state where the bumper case as illustrated in FIG 2 is attached to a smartphone.

Firstly, the bumper case applied to the present invention may be processed to be formed of soft rubber having good flexibility, and may be processed in various colors by means of combinations of various colors in order to improve the aesthetic of an external appearance. Further, the bumper case may be processed by integrally forming all kinds of patterns on an inner surface or an outer surface thereof. However, it is apparent that such a processing may be merely incidental to the manufacturing process, and thus it is not a primary feature of the present invention.

It will be understood that although the term "bumper case" is called for convenience' shake with consideration of an effect on shock-absorbing usefulness, the term may be used in various way, and thus the present invention is not limited to the meaning of the term.

The present invention may be applied to a smartphone having a touch type information input means, as illustrated in FIG. 6. As illustrated in the drawing, a frame 10 of the present invention also maintains a rectangular shape corresponding to an external shape of a terminal having a rectangular shape. The frame flexibly covers the smartphone along an outer peripheral surface of a rim including upper, lower, left, and right sides of the smartphone. A protruded portion 11 is formed along circumferences of both surfaces of the rectangular frame 10 so as to partially cover outer peripheral surfaces of a front surface and a rear surface of the smartphone, and thus the frame 10 has a U-shape cross section. In such a configuration, the smartphone can be directly protected from an external force (for example, impact in the falling of the product) applied toward the side surfaces of the smartphone by impact-absorbing. Further, the frame can be attached to the smartphone to express the personality of a user and improve a receive sensitivity of radio waves.

The rim of the smartphone is provided with various function keys necessary to effectively use the smartphone and various connectors for connecting. In the present invention, openings 12 are formed in portions of the frame corresponding to positions of these function keys and connecters to be exposed as a space for allowing the function keys and connectors to be able to operate and connect. Alternatively, portions of the frame corresponding to the function keys may be made of soft rubber except for the connectors, and thus only the portions corresponding to the function keys may be very thinly formed with good flexibility by a two-shot injection molding process such that the function keys can be easily operated while the frame 10 is in close contact with the smartphone.

The protruded portion 11, which extends to a minimum, maintains close contact with the smartphone along the circumferences of the front surface and the rear surface of the smartphone. Thus, the frame according to the present invention can be continuously attached to the smartphone without being separated from the smartphone unless any external force is applied thereto.

In most advanced smartphones, since an embedded antenna is provided at the rim of a side surface thereof due to a structure of an internal circuit mounted therein, the portion provided with the antenna is gripped by hands of a user directly and frequently, so that a receive sensitivity of radio waves may be influenced due to foreign substances and other factors caused by sweats and touching by the user. However, by using the frame according to the present invention, the factors causing reception interference can be sufficiently removed and moderated, so that it is possible to effectively receive radio waves with high quality.

Although it is described in the above-mentioned embodiment that the frame is made of soft rubber, the present invention is not limited thereto. In another embodiment of the present invention, a hard material and a soft material are appropriately used, and the frame may be formed by bonding the hard material and the soft material or insertion-connecting by means of a two-shot injection molding process. As illustrated in FIG. 2, a central portion of a rim of the frame 10 of the bumper case is made of hard synthetic resin, and wing surfaces 10a of both side surfaces of the frame 10 and the protruded portion 11 extending toward the front and rear surfaces are made of soft rubber. In this way, the bumper case can be manufactured by integrally forming the different materials by an injection molding process.

In this case, as illustrated in FIGS. 3 to 5, in a connection method by a two-shot injection molding process, the hard synthetic resin frame 10 may be buried into the soft rubber. Alternatively, the soft rubber may be connected onto both side surfaces of the frame 10 through male-female connection. Otherwise, stepped portions may be formed on both side surfaces of the frame 10, the soft rubber may be formed to have shapes corresponding to the stepped portions, and the frame and the soft rubber may be bonded to each other.

As described above, the protruded portion 11 of the frame 10, which extends toward the front and rear surfaces, is formed to have a minimum width along the circumferences of the outer peripheral surfaces of the front and rear surfaces of the smartphone so as not to disturb an exposure of a unique design of the smartphone. Further, when the smartphone is placed on the floor, a liquid crystal display of the smartphone and the rear surface thereof are spaced apart from the floor by a height of the protruded portion, so that it is possible to effectively prevent adsorption of the foreign substances and scratches by the protruded portion 11.

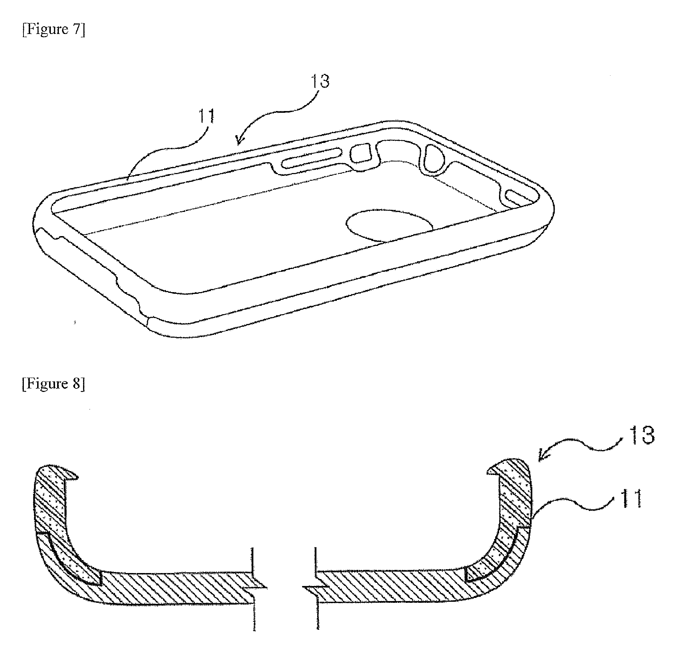

Meanwhile, FIGS. 7 and 8 are a perspective view and an enlarged cross-sectional view illustrating a mobile-phone case according to still another embodiment of the present invention, respectively. The mobile-phone case 13 may be made of hard synthetic resin and have a structure for covering a portion of a battery on the rear surface of the smartphone. The mobile-phone case 13 may be provided by integrally forming a selected part of the rim with the protruded portion 11 made of soft rubber to be connected to each other by means of a two-shot injection molding process.

## Claims

1. A mobile-phone bumper case that is integrally formed in a shape corresponding to an external shape of a smartphone, the mobile-phone bumper case comprising:
a frame that flexibly covers the smartphone along an outer peripheral surface of a rim of the smartphone,
wherein the frame is provided with a protruded portion that is integrally formed to extend along circumferences of front and rear surfaces of the smartphone so as to partially cover circumferences of outer peripheral surfaces of the front and rear surfaces of the smartphone, and has a U-shape cross section.

2. The mobile-phone bumper case of claim 1, wherein a central portion of a rim of the frame of the bumper case is made of hard synthetic resin, and wing surfaces of both side surfaces of the frame and the protruded portion extending toward the front and rear surfaces are made of soft rubber so as to be integrally formed by a two-shot injection molding process.

3. The mobile-phone bumper case of claim 1, wherein openings are formed in portions on the frame corresponding to function keys provided at the rim of the smartphone so as to allow the function keys to be operated without a hitch.

4. The mobile-phone bumper case of claim 1, wherein thin plate-shaped soft rubber is formed at portions of the frame corresponding to function keys provided at the rim of the smartphone by a two-shot injection molding process so as to allow the function keys to be operated without a hitch.

5. The mobile-phone bumper case of claim 2, wherein the two-shot injection molding process is performed such that the hard synthetic resin frame is buried into the soft rubber.

6. The mobile-phone bumper case of claim 2, wherein the two-shot injection molding process is performed such that the soft rubber is connected onto both side surfaces of the hard synthetic resin frame through male-female connection.

7. The mobile-phone bumper case of claim 2, wherein the two-shot injection molding process is performed such that stepped portions are formed on both side surfaces of the hard frame, the soft rubber is formed to have shapes corresponding to the stepped portions, and the hard frame and the soft rubber are bonded to each other.

8. The mobile-phone bumper case of claim 1, wherein the protruded portion of the frame, which extends toward the front and rear surfaces, is formed to have a minimum width along the circumferences of the outer peripheral surfaces of the front and rear surfaces of the smartphone so as not to disturb an exposure of a unique design of the smartphone.

9. A mobile-phone bumper case that is formed in a shape corresponding to an external shape of a smartphone to have a structure for covering a battery portion on a rear surface of the smartphone and is made of hard synthetic resin,
wherein a protruded portion made of soft rubber is integrally formed at a part of a rim of the mobile-phone bumper case so as to be connected to each other by a two-shot injection molding process.
